(19) Europäisches Patentamt
European Patent Office
Office européen des brevets

(11) **EP 0 897 406 B1**

(12) **EUROPÄISCHE PATENTSCHRIFT**

(45) Veröffentlichungstag und Bekanntmachung des Hinweises auf die Patenterteilung:
**21.03.2001   Patentblatt 2001/12**

(21) Anmeldenummer: **97922986.1**

(22) Anmeldetag: **07.05.1997**

(51) Int Cl.$^7$: **C08G 18/73**, C08G 18/48, C08G 18/22

(86) Internationale Anmeldenummer:
**PCT/EP97/02315**

(87) Internationale Veröffentlichungsnummer:
**WO 97/43328 (20.11.1997 Gazette 1997/50)**

(54) **HYDROPHILE, SELBSTKLEBENDE POLYURETHAN-GELMASSEN**

HYDROPHILIC, SELF-ADHESIVE POLYURETHANE GEL SUBSTANCES

MATIERES GELIFIEES POLYURETHANIQUES ADHERANT SOUS L'EFFET D'UNE PRESSION

(84) Benannte Vertragsstaaten:
**DE DK ES FR GB IT SE**

(30) Priorität: **10.05.1996   DE 19618825**

(43) Veröffentlichungstag der Anmeldung:
**24.02.1999   Patentblatt 1999/08**

(73) Patentinhaber: **BAYER AG**
**51368 Leverkusen (DE)**

(72) Erfinder:
• **GANSTER, Otto**
  **D-51519 Odenthal (DE)**
• **BÜCHNER, Jörg**
  **D-51467 Bergisch Gladbach (DE)**
• **KENNDOFF, Jochen, Werner**
  **D-21629 Neu Wulmstorf (DE)**
• **SACHAU, Günther**
  **D-25451 Quickborn (DE)**

(56) Entgegenhaltungen:
FR-A- 2 343 765          US-A- 4 584 362
US-A- 5 000 955

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die vorliegende Erfindung betrifft verbesserte hydrophile Polyurethan-Gelmassen und Schäume hieraus, die Verwendung der Polyurethan-Gelmassen für druckverteilende insbesondere selbsthaftende Polyurethan-(Schaum-) Gele hieraus sowie die Verwendung der Polyurethangelmassen für selbstklebende und druckverteilende Materialien und Haftklebeschichten.

Polyurethangele und Schäume hieraus sind z.B. bekannt aus EP 0 057 839, EP 0 147 588 oder US 4,661,099 sowie aus den Anmeldungen DE 43 08 445 oder DE 43 08 347. Die dort beschriebenen Polyurethan-Gele und die daraus hergestellten Schäume sind zum Teil selbsthaftende Systeme, die wässrige Flüssigkeiten im Bereich von wenigen Prozenten ihres Eigengewichtes bis zu mehr als dem 100-fachen ihres Eigengewichtes absorbieren können, wenn gegebenenfalls Füllstoffe wie zum Beispiel flüssigkeitsabsorbierende Polymere eingearbeitet werden.

Als Aufbaukomponenten dienen bei den in den erwähnten Dokumenten beschriebenen Gelen und Schaumgelen neben Polyhydroxyverbindungen aromatische oder aliphatische Polyisocyanate (in der Praxis werden tatsächlich aber ausschließlich aromatische Polyisocyanate verwendet). Sollen die Gele beispielsweise zum Gebrauch als Haftschichten für den Hautkontakt Verwendung finden, dann sind aber mit aliphatischen Isocyanaten hergestellte Gele solchen auf aromatischer Basis vorzuziehen. Versucht man allerdings nach den in den obigen Dokumenten beschriebenen Rezepturen hydrophile Gele auf Basis aliphatischer Isocyanate herzustellen, erhält man wegen der geringen Reaktivität der aliphatischen NCO-Gruppen nur sehr langsam ausreagierende Reaktionsmischungen, wenn man zur Vermeidung von Hautunverträg-lichkeiten nicht hohe Konzentrationen der dort angegebenen Amine oder Metallsalze als Katalysatoren verwenden kann. Ein weiterer Nachteil der nach den obigen Veröffentlichungen hergestellten aliphatischen Gele ist, daß sie äußerst empfindlich gegen oxidativen Abbau sind, welcher sehr rasch zur völligen Zerstörung des Gels (Verflüssigung) führt und diese Gele für eine kommerzielle Verwendung unbrauchbar macht.

Bei speziellen Anwendungen, zum Beispiel im medizinischen Bereich, besteht zudem die Anforderung der Materialsterilität.

Es gibt diverse Möglichkeiten, um steriles Material zu erhalten, so zum Beispiel die Strahlensterilisation, eine Gassterilisation mit Ethylenoxid oder die Dampfsterilisation.

Die genannten Sterilisationsverfahren werden alle bei der Herstellung medizinischer Produkte oder Gebrauchsmaterialien eingesetzt, allerdings haben alle diese Verfahren spezifische Vor- und Nachteile.

Eine wichtige Methode ist die der γ-Strahlensterilisation. Diese Methode hat den Vorteil, daß das zu sterilisierende Material bereits dicht verpackt sein kann, und keine Rückstände aus dem Sterilisationsprozeß im zu sterilisierenden Material verbleiben. Nachteil ist, daß in vielen Materialien, wie zum Beispiel Materialien organischen Ursprungs oder synthetischen Polymeren, Radikale erzeugt werden, die in der Folge zum Abbau des Materials führen. Das Resultat ist also eine sofortige Zersetzung oder eine deutliche Verminderung der Haltbarkeit des Materials nach der Sterilisation.

Bei den Polyurethan-Gelen oder Polyurethan-Schaumgelen wird dies deutlich am Verlust der Kohäsivität des Gel-Materials. Im Extremfall geht das Gel beziehungsweise das Schaumgel durch die γ-Sterilisation wieder in eine hochviskose Flüssigkeit über.

Aufgabe der Erfindung war es nun, auf Basis aliphatischer Isocyanate und unter Vermeidung aminischer Katalysatoren alterungsbeständige Polyurethan-Gele herzustellen, die trotz der geringen Reaktivität der aliphatischen NCO-Gruppen mindestens ebenso rasch ausreagieren wie die üblichen mit aromatischen Isocyanaten hergestellten, des weiteren Polyurethan-Schaumgele sowie γ-sterilisierbare Polyurethan-Gele und Polyurethan-Schaumgele.

Gegenstand der Erfindung sind daher hydrophile, selbstklebende Polyurethan-Gele aus

a) 2 bis 6 Hydroxylgruppen aufweisenden Polyetherpolyolen mit OH-Zahlen von 20 bis 112 und einem Ethylenoxid (EO)-Gehalt von ≥10 Gew.-%,

b) Antioxydantien,

c) in den Polyolen a) löslichen Wismut-(III)-Carboxylaten auf Basis von Carbonsäuren mit 2 bis 18 C-Atomen als Katalysatoren sowie

d) Hexamethylendiisocyanat oder einem modifizierten Hexamethylendiisocyanat,

wobei das Produkt der Funktionalitäten der polyurethanbildenden Komponenten a) und d) mindestens 5,2 ist, die Katalysatormenge c) 0,005 bis 0,5 Gew.-%, bezogen auf das Polyol a) beträgt, die Menge an Antioxydantien b) mindestens 0,1 Gew.-%, bezogen auf Polyol a) beträgt und ein Verhältnis von freien NCO-Gruppen der Komponente d) zu den freien OH-Gruppen der Komponente a) (Isocyanatkennzahl) im Bereich von 0,30 bis 0,70 gewählt wird.

Erfindungsgemäß werden bevorzugt 3 bis 4, ganz besonders bevorzugt 4 Hydroxylgruppen aufweisende Polyetherpolyole eingesetzt mit einer OH-Zahl im Bereich von 20 bis 112, bevorzugt 30 bis 56. Der Ethylenoxidgehalt liegt bei den erfindungsgemäß eingesetzten Polyetherpolyolen bei vorzugsweise ≥ 20 Gew.-%.

Die erfindungsgemäßen Polyetherpolyole sind als solche an sich bekannt und werden z.B. durch Polymerisation von Epoxiden, wie Ethylenoxid, Propylenoxid, Butylenoxid oder Tetrahydrofuran, mit sich selbst oder durch Anlagerung dieser Epoxide, vorzugsweise von Ethylenoxid und Propylenoxid - gegebenenfalls im Gemisch untereinander oder separat nacheinander - an Starterkomponenten mit mindestens zwei reaktionsfähigen Wasserstoffatomen, wie Wasser, Ethylenglykol, Propylenglykol, Dimethylenglykol, Dipropylenglykol, Glycerin, Trimethylolpropan, Pentaerytrit, Sorbit oder Succrose, hergestellt. Vertreter der genannten, erfindungsgemäß zu verwendenden höhermolekularen Polyhydroxylverbindungen sind z.B. in High Polymers, Vol. XVI, »Polyurethanes, Chemistry and Technology" (Saunders-Frisch, Interscience Publishers, New York, Bd. 1, 1962, S. 32-42) aufgeführt.

Als Isocyanatkomponente wird erfindungsgemäß monomeres oder trimerisiertes Hexamethylendiisocyanat oder auch durch Biuret-, Uretdion-, Allophanatgruppen oder durch Prepolymerisierung mit Polyetherpolyolen oder Mischungen von Polyetherpolyolen auf Basis der bekannten Starterkomponenten mit 2 oder >2 reaktionsfähigen H-Atomen und Epoxiden, wie Ethylenoxid oder Propylenoxid einer OH-Zahl ≤850, bevorzugt 100 bis 600, modifiziertes Hexamethylendiisocyanat eingesetzt. Bevorzugt ist der Einsatz von modifiziertem Hexamethylendiisocyanat, insbesondere durch Prepolymerisierung mit Polyetherdiolen der OH-Zahl 200 bis 600 modifiziertes Hexamethylendiisocyanat. Ganz besonders bevorzugt sind Modifizierungen des Hexamethylendiisocyanates mit Polyetherdiolen der OH-Zahl 200-600, deren Restgehalt an monomerem Hexamethylendiisocyanat unter 0,5 Gew.-% liegt.

Als Katalysatoren kommen für die erfindungsgemäßen Polyurethan-Gele in den wasserfreien Polyetherpolyolen a) lösliche Wismut-(III)-Carboxylate auf Basis linearer, verzweigter, gesättigter oder ungesättigter Carbonsäuren mit 2 bis 18, vorzugsweise 6 bis 18 C-Atomen in Frage. Bevorzugt sind Wismut-(III)-Salze verzweigter gesättigter Carbonsäuren mit tertiären Carboxylgruppen, wie der 2,2-Dimethyl-Oktansäure (z.B. Versatic-Säuren, Shell). Gut geeignet sind Zubereitungen dieser Bi(III)Salze in überschüssigen Anteilen dieser Carbonsäuren. Hervorragend bewährt hat sich eine Lösung von 1 mol des Bi(III)Salzes der Versatic 10-Säure (2,2-Dimethyloktansäure) in einem Überschuß von 3 mol dieser Säure mit einem Bi-Gehalt von 17%.

Erfindungsgemäß werden die Katalysatoren bevorzugt in Mengen von 0,01 bis 0,3, insbesondere 0,03 bis 0,15 Gew.-% bezogen auf das Polyol a), eingesetzt.

Als Antioxidantien (Stabilisatoren) kommen für die erfindungsgemäßen Polyurethan-Gele und Polyurethan-Schaumgele insbesondere sterisch gehinderte phenolische Stabilisatoren, wie BHT (2,6-Di-tert.-butyl-4-methylphenol), Vulkanox BKF (2,2'-Methylen-bis-(6-tert. -butyl-4-methyl-phenol) (Bayer AG), Irganox 1010 (Pentaerythrityl-tetrakis-[3-(3,5-ditert.-butyl-4-hydroxyphenyl)propionat, Irganox 1076 (Octadecyl-3-(3,5-ditert.-butyl-4-hydroxyphenyl)propionat), Irganox 1330 (1,3,5-trimethyl-2,4,6-tris(3',5'-di-tert-butyl-4'-hdroxybenzyl)benzol, Irganox 1520 (2-methyl-4,6-bis[(octylthio)methyl]phenol) (Ciba Geigy) und/oder Tocopherole in Betracht. Bevorzugt werden solche vom Typ $\alpha$-Tocopherol (Vitamin E) eingesetzt. Weitere Stabilisatoren sind beispielsweise in Ullmann (Vol. A3, S. 91-111; Vol. A20, S. 461-479; Vol. A23, 381-391) genannt.

Die Stabilisierungseigenschaften der phenolischen Stabilisatoren können durch Zusatz von organisch substituierten Sulfiden oder Disulfiden, wie z.B. Irganox PS800 (3,3'-Thiodipropionsäuredilaurylester) oder Dioctyldidecyldisulfid, noch verbessert werden. Auch Kombinationen der phenolischen Typen untereinander sind möglich.

Durch den Zusatz der aufgeführten Stabilisatoren wird insbesondere ermöglicht, aus den erfindungsgemäßen Polyurethan-Gelen und Polyurethan-Schaumgelen Produkte herzustellen, die auch mittels einer energiereichen $\gamma$-Strahlung sterilisiert werden können. Dies ist insbesondere in der Herstellung von medizinischen Artikeln, wie zum Beispiel Wundversorgungsprodukten (u.a. Wundschnellverbände, Pflaster oder Tamponaden), von hervorragender Bedeutung.

Die Antioxidantien werden bevorzugt in Mengen von 0,15 bis 5 Gew.-%, insbesondere 0,2 bis 2,0 Gew.-%, bezogen auf das Polyol a), eingesetzt. Bei Anti-oxidantsgemischen, wie sie oben erwähnt sind, werden die Antioxidantien bevorzugt in Mengen von 0,05 bis 0,5 Gew.-% je Einzelsubstanz, bezogen auf das Polyol a), eingesetzt.

Erfindungsgemäß können den hydrophilen Gelmassen die für Polyurethane üblichen Zusatzstoffe, wie Füllstoffe, Farbstoffe, Verdickungsmitel, Streckmittel, Harze etc., zugesetzt werden, bevorzugt bis zu 100 Gew.-%, bezogen auf die Polyole a). Als Füllstoffe werden aus der Polyurethan-Chemie an sich bekannte Zusatzstoffe verwendet, wie z.B. Kurzfasern auf anorganischer oder organischer Basis. Als anorganische Füllstoffe seien insbesondere genannt Pulver aus Zinkoxid und Titandioxid sowie Kurzfasern, wie Glasfasern von 0,1-1 mm Länge. An organischen Füllstoffen seien insbesondere aufgeführt quellfähige Pulver und Fasern mit einer Faserlänge > 0,01 mm, z.B. Fasern auf Basis von Polyacrylsäuren und deren Salzen oder anderen, wie sie beispielsweise in Absorbent Polymer Technology (Brannon-Peppas, Harland, ELSEVIER, Amsterdam-Oxford-New York-Tokyo, 1990, S. 9-22) genannt sind, sowie als Textilfasern eingesetzte Materialien, wie z.B. Polyester- oder Polyamidfasern. Als Farbstoffe oder Farbpigmente sind insbesondere solche zu verstehen, wie sie in Lebensmitteln, Verpackungen oder Kosmetika eingesetzt werden. Flüssige Streckmittel oder Harze sind insbesondere polymere Vinylverbindungen, Polyacrylate und sonstige in der Klebstofftechnik üblichen Copolymere, die Hafteingenschaften beeinflussen können.

Weiterhin können die hydrophilen Gelmassen erfindungsgemäß auch geschäumt werden, wobei die Dichte des geschäumten Gels auf bis zu 1/6 der Ausgangsdichte der Gelmasse reduziert wird. Als Schäumungsmittel können in der Polyurethanchemie gängige Schäumungsmittel verwendet werden. Hierzu zählt beispielsweise chemisch in situ erzeugtes Kohlendioxid als Reaktionsprodukt aus Isocyanat mit Wasser oder physikalisch wirkende, wasserfreie Treibmittel wie niedrig siedende Flüssigkeiten, beispielsweise FKW 113, HFCKW 22 oder n- und iso-Pentan, Cyclopentan, Butane und Hexane. Weitere sind beispielsweise im Kunststoff Handbuch, Nr. 7, Polyurethane (Becker, Braun, Carl Hanser, München-Wien, 1993, S. 115-118) beschrieben. Insbesondere eignen sich jedoch inerte Gase zur Schäumung der erfin-dungsgemäßen Polyurethanmassen. Hierbei werden Gase, wie z.B. Stickstoff, Edel-gase oder Kohlendioxid, ohne Zusatz von Wasser mit Hilfe handelsüblicher Polyurethan-Mischtechnik eingeschlagen.

Die Isocyanatkennzahl (Verhältnis der bei der Reaktion eingesetzten freien NCO-Gruppen zu den freien OH-Gruppen) der erfindungsgemäßen Polyurethan-Gele und der Polyurethan-Schaumgele liegt je nach Funktionalität der eingesetzten Isocyanat-und Polyolkomponenten im Bereich von 0,3 bis 0,7, bevorzugt im Bereich von 0,42 bis 0,60. Die für die Qualität des Polyurethan-(Schaum-)Geles charakteristische Isocyanatkennzahl kann sehr einfach nach der folgenden Formel abgeschätzt werden:

$$\text{Kennzahl} \approx \frac{f(\text{Isocyanat})}{f(\text{Polyol}) \times (f(\text{Isocyanat})-1)},$$

wobei

f    für die Funktionalität der Isocyanat- oder Polyolkomponente steht.

Je nach angestrebter Klebrigkeit und Elastizität des Gels kann die tatsächlich zu verwendende Isocyanatkennzahl um bis zu ± 20% von dem berechneten Wert abweichen.

Die erfindungsgemäßen Polyurethan-Gelmassen werden hergestellt nach üblichen Verfahren, wie sie beispielsweise beschrieben sind in Becker/Braun, Kunststoff-Handbuch, Bd. 7, Polyurethane, S. 139 ff, Carl-Hanser Verlag München Wien, 1993.

Die erfindungsgemäßen Polyurethan-Gelmassen und Polyurethan-Schaumgelmassen können generell verwendet werden zur Herstellung von Formkörpern und Haftschichten, insbesondere von Produkten, die Kontakt haben mit menschlichen und tierischen Geweben, wie mit der Haut, mit Schleimhäuten oder mit offenen Wunden oder mit Körperflüssigkeiten und Sekreten, wie z.B. Speichel, Blut, Wundflüssigkeiten, Urin, Fäkalien oder Schweiß. Die Materialien sind auch für Verklebung und Fixierung auf der Haut geeignet. Bevorzugt ist der Einsatz in medizinischen Bereichen, insbesondere als schwach oder stark selbstklebende Beschichtungen, eingesetzt als Pflaster, Wundschnellverbände oder zur Verklebung von Wundversorgungsprodukten auf der Körperoberfläche. Sie dienen zusätzlich der Aufnahme von Blut oder Wundsekret sowie der Polsterung und thermischen Isolierung. Durch Schäumung der erfindungsgemäßen Gele kann die Aufnahme von Flüssigkeiten beschleunigt werden. Darüber hinaus wird ein deutlich besserer Polsterungseffekt sowie eine verbesserte thermische Isolierung erreicht. Weitere Anwendungsgebiete z.B. sind Orthopädieartikel, Hygiene- und Kosmetikartikel oder stark feuchteauf-nehmende, quellfähige und polsternde Auflagen und Einlagen, gegebenenfalls auch als druckverteilungsfähige Füllmassen für Kissen oder Polsterelemente.

1. Einsatzkomponenten:

1.1 Isocyanat 1 (erfindungsgemäß)
    7 mol Hexamethylendiisocyanat und 1 mol eines Polypropylenoxidiols mit einem mittleren Molgewicht von 400 (OHZ = 280) wurden bei 80°C. umgesetzt. Anschließend wurde der Überschuß an monomerem Diisocyanat in einem Verdampfer bei ca. 0,5 mbar bis zu einem Restgehalt von ca. 0,2 Gew.-% destillativ entfernt. Das verbleibende NCO-Prepolymer hatte einen NCO-Gehalt von 12,6 Gew.-% und eine Viskosität (bei 23°C) von 2500 mPa*s.

1.2 Isocyanat 2 (Vergleich)
    NCO-Prepolymer hergestellt aus 5,1 mol 4,4'-MDI und einem Mol eines Polypropylenglykols mit einem mittleren Molekulargewicht von 220. Die Ausgangsstoffe wurden bei 80°C umgesetzt. Man erhält ein NCO-Prepolymer mit einem NCO-Gehalt von 22,7 %.

1.3 Basispolyol
    Polyether-Polyol des folgenden Aufbaus:

Pentaerythrit + Propylenoxid + Ethylenoxid-Mischpolymerisat mit Ethylenoxid-Endblock.
Funktionalität: 4; OHZ (OH-Zahl): 35; Mittleres Molgewicht: 6400 (berechnet),
Ethylenoxid-Gehalt: 20 Gew.-%.
Dem Basispolyol wurden vor der Verarbeitung zum Gel 0,50 Gew. % BHT zugesetzt.

1.4 Bi(III)Salz-Katalysator

Lösung von 1 mol des Bi(III)Salzes mit 2,2-Dimethyloctansäure in 3 mol 2,2-Dimethyloctansäure (mit einem Wismutgehalt von ca. 17 Gew.-%); (im Handel erhältlich unter der Bezeichnung Coscat 83; Hersteller: Cosan Chemical Corp., Carlstadt, N.J., USA)

2. Messungen zur Reaktionsgeschwindigkeit

Als Maßstab für die Reaktivität wurde die Gelzeit der Mischung bei Raumtemperatur (23°C) bestimmt: 1000 g des Basispolyols wurde mit dem Katalysator versetzt und in einer 1 l Rührapparatur 2 h lang bei RT homogenisiert. 100 g dieser Mischung wurden mit 10,4 oder 5,7 g der Isocyanate 1 oder 2 versetzt und 1 Minute lang mit einem Glasstab intensiv vermischt. Die Prüfung der Gelierung erfolgte im Minutenabstand: Die Gelierzeit war erreicht, sobald die Reaktionsmischung nicht mehr fließfähig war und beim schnellen Herausziehen des Glasstabes das anhaftende Gel abriß.

In allen Beispielen wurde dasselbe Basispolyol verwendet. Die Gelzeit von Vergleichsbeispiel 1 gibt die Geschwindigkeit der Gelbildung vor, wie sie sich mit einem aromatischen Diisocyanat (Isocyanat 2) in der Praxisverarbeitung bewährt hat.

Die Beispiele 1 und 2 sind erfindungsgemäß. Beispiel 1 belegt, daß der Wismut(III)Salz-Katalysator in der Lage ist, bei Verwendung des aliphatischen Isocyanats 1 die Vernetzung auf das Niveau der Umsetzung des aromatischen Isocyanats 1 in Vergleichsbeispiel 1 zu beschleunigen. Beispiel 2 im Vergleich zu Vergleichsbeispiel 2 zeigt, daß im Falle der Verwendung des aliphatischen Diisocyanats der Wismut(III)Salz-Katalysator sehr viel wirksamer ist als der üblicherweise als sehr wirksam betrachtete Zinnkatalysator (in Vergleichsbeispiel 2).

| | Vergleichsbeispiel 1 | Beispiel 1 | Beispiel 2 | Vergleichsbeispiel 2 | Einheit |
|---|---|---|---|---|---|
| Basispolyol | 100 | 100 | 100 | 100 | G.T. |
| DBTL* | 0,02 | - | - | 0,15 | G.T. |
| Bi(III)-Salz-**)-Katalysator | - | 0,03 | 0,15 | - | G.T. |
| Isocyanat 2 | 5,7 | - | - | - | G.T. |
| Isocyanat 1 | - | 10,4 | 10,4 | 10,4 | G.T. |
| Isocyanat Kennzahl | 0,50 | 0,50 | 0,50 | 0,50 | |
| Gelzeit | 12 | 11 | 3 | 29 | Min. |

*Dibutylzinndilaurat

G.T. = Gewichtsteile

** Coscat 83

3. Messungen zur Stabilität

Zur Herstellung der Lagerungsmuster wurden das unter 1.3. genannte Polyol anstatt mit 0.5 Gew.-% BHT vor der Verarbeitung mit dem jeweils zu untersuchenden Antioxidans oder den Kombinationen versetzt.

3.1 Herstellung der Muster

1) A Gewichtsteile (Gew.-Teile) des Basispolyols wurde gegebenenfalls mit B Gew.-Teilen Antioxidans, C Gew.-Teilen Katalysator und auch mit E Gew.-Teilen Füllstoff versetzt und in einer 1 l Rührapparatur 2h lang bei Raumtemperatur homogenisiert (siehe Tabelle 1). Y Gew.-Teile dieser Mischung wurden mit Z Gew.-Teilen Isocyanat 1 oder 2 vesetzt und 1 Minute lang mit einem Glasstab intensiv vermischt (siehe Tabelle 2).
   Das noch flüssige Material wurde auf silikonisiertem Papier zu 1 - 2 mm dicken Platten vergossen und 10 min bei 80°C im Trockenschrank gehärtet.

2) A Gewichtsteile (Gew.-Teile) des Basispolyols wurde mit B Gew.-Teilen Antioxidans, C Gew.-Teilen Katalysator und gegebenenfalls auch mit E Gew.-Teilen Füllstoff versetzt und in einer 5l Rührapparatur 2h lang bei Raumtemperatur homogenisiert. Mit Hilfe einer Standard-Misch- und Dosieranlage zur Verarbeitung von Polyurethan- und Klebstoffzubereitungen wurden Y Gew.-Teile dieser Mischung wurden mit Z Gew.-Teilen Isocyanat 1 und gegebenenfalls mit F Gew.-Teilen des Schäumungsmittels intensiv gemischt.

a) Ca. 10g des fertigen Reaktionsgemisches wurden auf PE-Deckeln zu Platten mit 1-2 mm Dicke vergossen und anschließend für 10 min bei 80 °C im Trockenschrank gehärtet.

b) Alternativ wurde mit Hilfe eines Rakels die flüssige Masse zu 1-2 mm starken flächigen Gebilden vestrichen. Anschließend wurde das Material bei 18 min 80 °C 18 Minuten gehärtet.

c) Alternativ wurde mit Hilfe eines Rakels die flüssige Masse zu 1-2 mm starken flächigen Gebilden vestrichen. Anschließend wurde das Material 6 Minuten bei 70 °C gehärtet.

Die Lagerung der Muster erfolgte nicht abgedeckt im Umlufttrockenschrank bei 70°C in Kristallisierschalen mit einem Durchmesser von 23 cm. Die Muster wurden anfangs in Abständen von 1 Woche, später im Abstand von 4 Wochen optisch beurteilt und durch Berühren mit einem Glasstab auf ihre Festigkeit geprüft (siehe Tabelle 3).

Die Muster wurden als zerstört gewertet, wenn sie zerlaufen waren, bröselig oder sehr weich geworden waren.

**Tabelle 1**:     Angaben zur Mischungszusammensetzung

| Muster | Vorschrift | Mischung | | Katalysator C [Gew.-Teile] | Stabilisator B | Stabilisator B [Gew.-Teile] |
|---|---|---|---|---|---|---|
| | | Basispolyol A [Gew.-Teile] | Füllstoff E [Gew.-Teile] | | | |
| 1 | 1) | 100 | 42.9 | 0.1 Bi(III)S. | BHT + Vit.E | 0.1 + 0.5 |
| 2 | 1) | 100 | 42.9 | 0.1 Bi(III)S. | ohne | |
| 3 | 1) | 100 | 42.9 | 0.1 Bi(III)S. | ohne | |
| 4 | 1) | 100 | 42.9 | 0.1 Bi(III)S. | ohne | |
| 5 | 1) | 100 | 42.9 | 0.1 Bi(III)S. | ohne | |
| 6 | 1) | 100 | 42.9 | 0.1 Bi(III)S. | ohne | |
| 7 | 1) | 100 | 42.9 | 0.5 DBTL | ohne | |
| 8 | 1) | 100 | 42.9 | 0.5 DBTL | ohne | |
| 9 | 1) | 100 | 42.9 | 0.1 Bi(III)S. | BHT | 0.1 |
| 10 | 2c) | 100 | 40.0 | 0.02 DBTL | BHT | 0.1 |
| 11 | 2c) | 100 | 40.0 | 0.02 DBTL | BHT | 0.1 |
| 12 | 2c) | 100 | 40.0 | 0.02 DBTL | BHT | 0.1 |
| 13 | 1) | 100 | 42.9 | 0.1 Bi(III)S. | BHT | 0.36 |
| 14 | 1) | 100 | 42.9 | 0.5 DBTL | BHT + Vit.E | 0.1 + 0.5 |
| 15 | 1) | 100 | 42.9 | 0.1 Bi(III)S. | Vit.E (DAB) | 0.5 |
| 16 | 1) | 100 | 42.9 | 0.1 Bi(III)S. | Vit.E (DAB) | 0.5 |
| 17 | 1) | 100 | 42.9 | 0.1 Bi(III)S. | Vit.E (DAB) | 0.1 |
| 18 | 1) | 100 | 42.9 | 0.1 Bi(III)S. | Vit.E (92%) | 0.1 |
| 19 | 1) | 100 | 42.9 | 0.1 Bi(III)S. | Vit.E (92%) | 0.2 |
| 20 | 1) | 100 | 42.9 | 0.1 Bi(III)S. | Vit.E (92%) | 0.5 |
| 21 | 1) | 100 | 42.9 | 0.1 Bi(III)S. | Vit.E (92%) | 0.8 |
| 22 | 2b) | 100 | 40.0 | 0.05 Bi(III)S. | Vit.E (92%) | 0.5 |
| 23 | 2b) | 100 | 40.0 | 0.05 Bi(III)S. | Vit.E (92%) | 0.5 |

EP 0 897 406 B1

| Muster | Vorschrift | Mischung | | Katalysator C [Gew.-Teile] | Stabilisator B | Stabilisator B [Gew.-Teile] |
| | | Basispolyol A [Gew.-Teile] | Füllstoff E [Gew.-Teile] | | | |
| --- | --- | --- | --- | --- | --- | --- |
| 24 | 2a) | 100 | 40.0 | 0.1 Bi(III)S. | Vit.E (92%) | 0.8 |
| 25 | 2a) | 100 | 40.0 | 0.1 Bi(III)S. | Vit.E (92%) | 0.8 |
| 26 | 2a) | 100 | 40.0 | 0.1 Bi(III)S. | Vit.E (92%) | 0.8 |
| 27 | 1) | 100 | 42.9 | 0.1 Bi(III)S. | Vulkanox BKF | 0.5 |
| 28 | 1) | 100 | 42.9 | 0.1 Bi(III)S. | Vulkanox BKF +Dioctyldidecyldisulfid | 0.5 + 0.5 |
| 29 | 1) | 100 | 42.9 | 0.1 Bi(III)S. | Irganox1010 | 0.5 |
| 30 | 1) | 100 | 42.9 | 0.1 Bi(III)S. | Irganox 415 | 0.5 |
| 31 | 1) | 100 | 42.9 | 0.1 Bi(III)S. | Irganox 1013 | 0.5 |
| 32 | 1) | 100 | 42.9 | 0.1 Bi(III)S. | Irganox 1076 | 0.5 |
| 33 | 1) | 100 | 42.9 | 0.1 Bi(III)S. | Irganox 1330 | 0.5 |
| 34 | 1) | 100 | 42.9 | 0.1 Bi(III)S. | Irganox 1520 | 0.5 |
| 35 | 1) | 100 | ohne | 0.1 Bi(III)S. | ohne | |
| 36 | 1) | 100 | ohne | 0.1 Bi(III)S. | ohne | |
| 37 | 1) | 100 | ohne | 0.1 Bi(III)S. | ohne | |
| 38 | 1) | 100 | ohne | 0.1 Bi(III)S. | ohne | |
| 39 | 1) | 100 | ohne | 0.1 Bi(III)S. | BHT | 0.1 |
| 40 | 1) | 100 | ohne | 0.1 Bi(III)S. | BHT | 0.1 |
| 41 | 1) | 100 | ohne | 0.02 DBTL | ohne | |
| 42 | 1) | 100 | ohne | 0.02 DBTL | ohne | |
| 43 | 1) | 100 | ohne | 0.02 DBTL | ohne | |
| 44 | 1) | 100 | ohne | 0.02 DBTL | ohne | |
| 45 | 1) | 100 | ohne | 0.02 DBTL | Vit.E (92%) | 0.1 |

| Muster | Vorschrift | Mischung | | Katalysator C [Gew.-Teile] | Stabilisator B | Stabilisator B [Gew.-Teile] |
|---|---|---|---|---|---|---|
| | | Basispolyol A [Gew.-Teile] | Füllstoff E [Gew.-Teile] | | | |
| 46 | 1) | 100 | ohne | 0.02  DBTL | Vit.E (92%) | 0.1 |
| 47 | 1) | 100 | ohne | 0.02  DBTL | BHT | 0.1 |
| 48 | 1) | 100 | ohne | 0.02  DBTL | BHT | 0.1 |

9

EP 0 897 406 B1

**Tabelle 2:** Angaben zum Gemisch aus Mischung und Isocyanat

| Muster | Vorschrift | Vernetzer D | NCO-Gehalt [%] | Mischung Y [Gew.-Teile] | Isocyanat Z [Gew.-Teile] | Schäumungsmittel F [Gew.-Teile] | Kennzahl |
|---|---|---|---|---|---|---|---|
| 1 | 1) | Isocyanat 1 | 13,30 | 100 | 6.6 | | 47 |
| 2 | 1) | Isocyanat 1 | 13,30 | 100 | 6.6 | | 47 |
| 3 | 1) | Isocyanat 1 | 13,30 | 100 | 6.6 | | 47 |
| 4 | 1) | Isocyanat 1 | 13,30 | 100 | 8.3 | | 60 |
| 5 | 1) | Isocyanat 1 | 13,30 | 100 | 7.6 | | 55 |
| 6 | 1) | Isocyanat 1 | 13,30 | 100 | 6.9 | | 50 |
| 7 | 1) | Isocyanat 1 | 13,30 | 100 | 6.6 | | 47 |
| 8 | 1) | Isocyanat 1 | 13,30 | 100 | 6.6 | | 47 |
| 9 | 1) | Isocyanat 1 | 13,30 | 100 | 6.6 | | 47 |
| 10 | 2c) | Isocyanat 2 | 23 | 100 | 4.0 | 0.1 Stickstoff | 50 |
| 11 | 2c) | Isocyanat 2 | 23 | 100 | 4.0 | 0.1 Stickstoff | 50 |
| 12 | 2c) | Isocyanat 2 | 23 | 100 | 4.0 | 0.1 Stickstoff | 50 |
| 13 | 1) | Isocyanat 1 | 13,30 | 100 | 6.6 | | 47 |
| 14 | 1) | Isocyanat 1 | 13,30 | 100 | 6.6 | | 47 |
| 15 | 1) | Isocyanat 1 | 13,30 | 100 | 6.6 | | 47 |
| 16 | 1) | Isocyanat 1 | 13,30 | 100 | 6.6 | | 47 |
| 17 | 1) | Isocyanat 1 | 11,40 | 100 | 7 | | 47 |
| 18 | 1) | Isocyanat 1 | 11,40 | 100 | 7 | | 47 |
| 19 | 1) | Isocyanat 1 | 11,40 | 100 | 7 | | 47 |
| 20 | 1) | Isocyanat 1 | 11,40 | 100 | 7 | | 47 |
| 21 | 1) | Isocyanat 1 | 11,40 | 100 | 7 | | 47 |

EP 0 897 406 B1

| Muster | Vorschrift | Vernetzer D | NCO-Gehalt [%] | Mischung Y [Gew.-Teile] | Isocyanat Z [Gew.-Teile] | Schäumungsmittel F [Gew.-Teile] | Kennzahl |
|---|---|---|---|---|---|---|---|
| 22 | 2b) | Isocyanat 1 | 11,40 | 100 | 8.2 | 0.1 Stickstoff | 50 |
| 23 | 2b) | Isocyanat 1 | 11,40 | 100 | 8.2 | | 50 |
| 24 | 2a) | Isocyanat 1 | 12,20 | 100 | 6.6 | | 44 |
| 25 | 2a) | Isocyanat 1 | 12,20 | 100 | 6.9 | | 46 |
| 26 | 2a) | Isocyanat 1 | 12,20 | 100 | 7.2 | | 48 |
| 27 | 1) | Isocyanat 1 | 13,30 | 100 | 6.7 | | 48 |
| 28 | 1) | Isocyanat 1 | 13,30 | 100 | 6.7 | | 48 |
| 29 | 1) | Isocyanat 1 | 13,30 | 100 | 5 | | 47 |
| 30 | 1) | Isocyanat 1 | 13,30 | 100 | 5 | | 47 |
| 31 | 1) | Isocyanat 1 | 13,30 | 100 | 5 | | 47 |
| 32 | 1) | Isocyanat 1 | 13,30 | 100 | 5 | | 47 |
| 33 | 1) | Isocyanat 1 | 13,30 | 100 | 5 | | 47 |
| 34 | 1) | Isocyanat 1 | 13,30 | 100 | 5 | | 47 |
| 35 | 1) | Isocyanat 1 | 11,40 | 100 | 10,2 | | 45 |
| 36 | 1) | Isocyanat 1 | 11,40 | 100 | 13.5 | | 60 |
| 37 | 1) | Isocyanat 1 | 11,40 | 100 | 16.9 | | 75 |
| 38 | 1) | Isocyanat 1 | 11,40 | 100 | 22.6 | | 100 |
| 39 | 1) | Isocyanat 1 | 11,40 | 100 | 10,2 | | 45 |
| 40 | 1) | Isocyanat 1 | 11,40 | 100 | 13.5 | | 60 |
| 41 | 1) | Isocyanat 2 | 23 | 100 | 5.7 | | 45 |
| 42 | 1) | Isocyanat 2 | 23 | 100 | 6.8 | | 60 |
| 43 | 1) | Isocyanat 2 | 23 | 100 | 8.5 | | 75 |
| 44 | 1) | Isocyanat 2 | 23 | 100 | 11.4 | | 100 |
| 45 | 1) | Isocyanat 2 | 23 | 100 | 5.7 | | 45 |
| 46 | 1) | Isocyanat 2 | 23 | 100 | 6.8 | | 60 |

EP 0 897 406 B1

| Muster | Vorschrift | Vernetzer D | NCO-Gehalt [%] | Mischung Y [Gew.-Teile] | Isocyanat Z [Gew.-Teile] | Schäumungsmittel F [Gew.-Teile] | Kennzahl |
|---|---|---|---|---|---|---|---|
| 47 | 1) | Isocyanat 2 | 23 | 100 | 5.7 | | 45 |
| 48 | 1) | Isocyanat 2 | 23 | 100 | 6.8 | | 60 |

**Tabelle 3:**  Ergebnisse der Lagerung der Muster

| Muster | unsteril Temperatur: 70 °C Haltbarkeit [Wochen] | steril Temperatur: 70 °C Haltbarkeit [Wochen] | Verfärbung bei Bestrahlung | Strahlendosis [kGy] |
|---|---|---|---|---|
| 1 | >74 | >74 | zitronengelb | 28 - 33 |
| 2 | nicht gepr. | bei Bestrahlung zerstört | - | 28 - 33 |
| 3 | nicht gepr. | bei Bestrahlung zerstört | - | 28 - 33 |
| 4 | nicht gepr. | bei Bestrahlung zerstört | - | 28 - 33 |
| 5 | nicht gepr. | bei Bestrahlung zerstört | - | 28 - 33 |
| 6 | nicht gepr. | bei Bestrahlung zerstört | - | 28 - 33 |
| 7 | nicht gepr. | bei Bestrahlung zerstört | - | 28 - 33 |
| 8 | nicht gepr. | bei Bestrahlung zerstört | | 28 - 33 |
| 9 | 3 | 3 | ganz leicht gelb | 28 - 33 |
| 10 | 2 | 3 | ganz leicht gelb | 25.5 |
| 11 | 2 | 4 | ganz leicht gelb | 32.3 |
| 12 | 2 | 4 | ganz leicht gelb | 54.8 |
| 13 | 3 | 6 | ganz leicht gelb | 28 - 33 |
| 14 | 35 | 42 | zitronengelb | 28 - 33 |
| 15 | >74 | >74 | ganz leicht gelb | 28 - 33 |
| 16 | >74 | >74 | ganz leicht gelb | 28 - 33 |
| 17 | 11 | 1 | ganz leicht gelb | 28 - 33 |
| 18 | 18 | 1 | ganz leicht gelb | 28 - 33 |
| 19 | 32 | 8 | ganz leicht gelb | 28 - 33 |
| 20 | >40 | >40 | ganz leicht gelb | 28 - 33 |
| 21 | >40 | >40 | ganz leicht gelb | 28 - 33 |
| 22 | >21 | >21 | ganz leicht gelb | 28 - 33 |

EP 0 897 406 B1

| Muster | unsteril Temperatur: 70 °C Haltbarkeit [Wochen] | steril Temperatur: 70 °C Haltbarkeit [Wochen] | Verfärbung bei Bestrahlung | Strahlendosis [kGy] |
|---|---|---|---|---|
| 23 | >21 | >21 | ganz leicht gelb | 28 - 33 |
| 24 | >20 | >20 | ganz leicht gelb | 28 - 33 |
| 25 | >20 | >20 | ganz leicht gelb | 28 - 33 |
| 26 | >20 | >20 | ganz leicht gelb | 28 - 33 |
| 27 | >71 | >71 | ganz leicht gelb | 28 - 33 |
| 28 | >71 | >71 | ganz leicht gelb | 28 - 33 |
| 29 | >54 | >54 | leicht gelb | 28 - 33 |
| 30 | >54 | >54 | leicht beige | 28 - 33 |
| 31 | >54 | >54 | leicht gelb | 28 - 33 |
| 32 | >54 | >54 | leicht gelb | 28 - 33 |
| 33 | >54 | >54 | leicht gelb | 28 - 33 |
| 34 | >54 | >54 | leicht gelb | 28 - 33 |
| 35 | <3 Tage | <3 Tage | farblos | 28 - 33 |
| 36 | <3 Tage | <3 Tage | farblos | 28 - 33 |
| 37 | <3 Tage | <3 Tage | farblos | 28 - 33 |
| 38 | <3 Tage | <3 Tage | farblos | 28 - 33 |
| 39 | >1 | >1 | zitronengelb | 28 - 33 |
| 40 | >1 | >1 | zitronengelb | 28 - 33 |
| 41 | >1 | >1 | leicht gelb | 28 - 33 |
| 42 | >1 | >1 | leicht gelb | 28 - 33 |
| 43 | >1 | >1 | leicht gelb | 28 - 33 |
| 44 | >1 | >1 | leicht gelb | 28 - 33 |
| 45 | >1 | >1 | dunkelgelb | 28 - 33 |
| 46 | >1 | >1 | dunkelgelb | 28 - 33 |

| Muster | unsteril Temperatur: 70 °C Haltbarkeit [Wochen] | steril Temperatur: 70 °C Haltbarkeit [Wochen] | Verfärbung bei Bestrahlung | Strahlendosis [kGy] |
|---|---|---|---|---|
| 47 | >1 | >1 | dunkelgelb | 28 - 33 |
| 48 | >1 | >1 | dunkelgelb | 28 - 33 |

In allen Beispielen wurde das beschriebene Basispolyol verwendet.

Die Beispiele 2 bis 8 und 35 bis 38 zeigen, daß grundsätzlich eine Stabilisierung erforderlich ist. Denn bei γ-Strahlensterilisation werden diese Gele soweit abgebaut, daß sie zerfließen oder nach kürzester Zeit zerfallen sind (Vergleich).

Die Beispiele 9 bis 12 sowie 17 bis 18 zeigen, daß bereits niedrige Stabilisator-konzentrationen eine Stabilisierung der Materialien ermöglichen. Dies ist insbesondere der Fall, wenn das Material γ-sterilisiert wird.

Die Beispiele 18 bis 20 zeigen, daß die Stabilität des Materials von der Konzentration des Stabilisators abhängig ist.

Die Beispiele 1, 9, 13 bis 34 sowie 39 bis 40 belegen, daß insbesondere mit höhermolekularen phenolische Stabilisatoren, Gemische hieraus sowie mit Zusatz von sulfidischen Verbindungen selbst unter extremen Temperaturbedingungen bei 70°C im Umlufttrockenschrank teilweise Lagerungszeiten von mehr als einem Jahr realisiert werden können. Damit ist auch unter extremen Bedingungen eine Lagerungsdauer mindestens 5 Jahren auch unter extremen Umwelttemperatureinflüssen möglich. Selbst die Verwendung der Wundschnellverbände in Erste-Hilfe-Kästen, wie sie in Fahrzeugen vorgeschrieben sind, ist durchaus möglich.

Die anderen erfindungsgemäßen Beispiele belegen, daß die verschiedensten Stabilisatoren in dem angegebenen Mengenbereich wirksam wird.

**Patentansprüche**

1.    Hydrophile, selbstklebende Polyurethan-Gelmassen aus

  a) 2 bis 6 Hydroxylgruppen aufweisenden Polyetherpolyolen mit OH-Zahlen von 20 bis 112 und einem Ethylenoxid (EO)-Gehalt von ≥ 10 Gew.-%,

  b) Antioxydantien,

  c) in den Polyetherpolyolen a) löslichen Wismut-(III)-Carboxylaten auf Basis von Carbonsäuren mit 2 bis 18 C-Atomen als Katalysatoren sowie

  d) Hexamethylendiisocyanat oder einem modifizierten Hexamethylendiisocyanat,

  wobei das Produkt der Funktionalitäten der polyurethanbildenden Komponenten a) und d) mindestens 5,2 ist, die Katalysatormenge c) 0,005 bis 0,5 Gew.-%, bezogen auf das Polyol a) beträgt, die Menge an Antioxydantien b) mindestens 0,1 Gew.-%, bezogen auf Polyol a) beträgt und ein Verhältnis von freien NCO-Gruppen der Komponente d) zu den freien OH-Gruppen der Komponente a) (Isocyanatkennzahl) im Bereich von 0,30 bis 0,70 gewählt wird.

2.    Hydrophile, selbstklebende Gelmassen nach Anspruch 1, dadurch gekennzeichnet, daß 3 bis 4 Hydroxylgruppen aufweisende Polyetherpolyole mit einer OH-Zahl von 30 bis 56 und einem EO-Gehalt von ≥20 Gew.-% eingesetzt werden.

3.    Hydrophile Gelmassen nach Anspruch 1, dadurch gekennzeichnet, daß ein durch Prepolymerisierung mit Polyetherdiolen der OH-Zahl 200 bis 600 modifiziertes Hexamethylendiisocyanat als Isocyanat-Komponente eingesetzt wird.

4.    Hydrophile Gelmassen nach Anspruch 1, dadurch gekennzeichnet, daß den Gelmassen bis zu 100 Gew.-%, bezogen auf die Polyole a), Zusatzstoffe zugesetzt werden.

5.    Hydrophile Gelmassen nach Anspruch 1, dadurch gekennzeichnet, daß die Gelmassen geschäumt werden, wobei die Dichte des geschäumten Gels auf bis zu 1/6 der Ausgangsdichte der Gelmasse reduziert wird.

6.    Verwendung der hydrophilen Polyurethan-Gelmassen nach Anspruch 1 für die Herstellung von Formkörpern und Haftschichten.

**Claims**

1.    Hydrophilic, self-adhesive polyurethane gel compositions prepared from

  a) polyether polyols with 2 to 6 hydroxyl groups and having OH values of 20 to 112 and an ethylene oxide (EO) content of ≥10 wt.%,

  b) anti-oxidants,

  c) bismuth(III) carboxylates soluble in the polyether polyols a) and based on carboxylic acids having 2 to 18 C atoms as catalysts together with

d) hexamethylene diisocyanate or a modified hexamethylene diisocyanate,

wherein the product of the functionalities of the polyurethane-forming components a) and d) is at least 5.2, the quantity of catalyst c) amounts to 0.005 to 0.5 wt.%, relative to the polyol a), the quantity of anti-oxidants b) is at least 0.1 wt.%, relative to polyol a) and a ratio of free NCO groups in component d) to the free OH groups in component a) (isocyanate index) in the range from 0.30 to 0.70 is selected.

2. Hydrophilic, self-adhesive gel compositions according to claim 1, characterised in that polyether polyols with 3 to 4 hydroxyl groups and having an OH value of 30 to 56 and an EO content of $\geq$20 wt.% are used.

3. Hydrophilic gel compositions according to claim 1, characterised in that a hexamethylene diisocyanate modified by prepolymerisation with polyether diols of an OH value of 200 to 600 is used as the isocyanate component.

4. Hydrophilic gel compositions according to claim 1, characterised in that up to 100 wt.% of additives, relative to the polyols a), are added to the gel compositions.

5. Hydrophilic gel compositions according to claim 1, characterised in that the gel compositions are foamed, wherein the density of the foamed gel is reduced as far as down to 1/6 of the initial density of the gel composition.

6. Use of the hydrophilic polyurethane gel compositions according to claim 1 for the production of mouldings and adhesive layers.


**Revendications**

1. Compositions de gels de polyuréthane hydrophiles autocollants formées à partir

a) de polyétherpolyols contenant 2 à 6 groupes hydroxyle, ayant un indice d'OH de 20 à 112 et une teneur en oxyde d'éthylène (EO) supérieure ou égale à 10 % en masse,
b) d'antioxydants,
c) de carboxylates de bismuth (III) solubles dans les polyols a), à base d'acides carboxyliques de 2 à 18 atomes de carbone, comme catalyseurs, et
d) de diisocyanate d'hexaméthylène ou d'un diisocyanate d'hexaméthylène modifié,

dans lesquelles le produit des fonctionnalités des constituants a) et d) formant le polyuréthane est égal à au moins 5,2, la quantité de catalyseur c) est de 0,005 à 0,5 % en masse par rapport au polyol a), la quantité d'antioxydants b) est d'au moins 0,1 % en masse par rapport au polyol a) et le rapport des groupes NCO libres du constituant d) aux groupes OH libres du constituant a) (coefficient d'isocyanate) est choisi entre 0,30 et 0,70.

2. Compositions de gels hydrophiles autocollants selon la revendication 1, caractérisées en ce que l'on utilise des polyétherpolyols contenant 3 à 4 groupes hydroxyle et ayant un indice d'OH de 30 à 56 et une teneur en EO supérieure ou égale à 20 % en masse.

3. Compositions de gels hydrophiles selon la revendication 1, caractérisées en ce que l'on utilise comme constituant isocyanate un diisocyanate d'hexaméthylène modifié par formation d'un prépolymère avec des polyétherdiols ayant un indice d'OH de 200 à 600.

4. Compositions de gels hydrophiles selon la revendication 1, caractérisées en ce que des additifs sont ajoutés aux compositions de gels en une quantité allant jusqu'à 100 % en masse par rapport aux polyols a).

5. Compositions de gels hydrophiles selon la revendication 1, caractérisées en ce que les compositions de gels sont expansées en mousse, la densité du gel expansé étant réduite jusqu'à 1/6 de la densité initiale de la composition de gel.

6. Utilisation des compositions de gels de polyuréthane hydrophiles selon la revendication 1 pour la préparation d'articles moulés et de couches adhésives.